# EUROPÄISCHE PATENTSCHRIFT

(11) **EP 1 029 176 B1**
(45) Veröffentlichungstag und Bekanntmachung des Hinweises auf die Patenterteilung: **03.03.2004**
(21) Anmeldenummer: 98954052.1
(22) Anmeldetag: 03.11.1998
(51) Int. Cl.: F03D 7/02

(54) **WINDKRAFTANLAGE**
WINDPOWERPLANT
INSTALLATION EOLIENNE

(30) Priorität: 04.11.1997 AT 186097
(43) Veröffentlichungstag der Anmeldung: 23.08.2000
(73) Patentinhaber: WINDTEC Anlagenerrichtungs- und Consulting GmbH, 9100 Völkermarkt (AT)
(72) Erfinder: Hehenberger, Gerald, 9020 Klagenfurt (AT)
(74) Vertreter: Hehenberger, Reinhard, Dipl.-Ing.
(86) Internationale Anmeldenummer: PCT/AT1998/000268
(87) Internationale Veröffentlichungsnummer: WO 1999/023384

(56) Entgegenhaltungen:
- DE-A- 3 150 715
- DE-A- 3 413 191
- DE-C- 19 634 059
- FR-A- 2 432 626
- FR-A- 2 574 490
- GB-A- 2 263 886
- US-A- 4 653 982
- US-A- 4 701 104
- US-A- 5 452 988

## Beschreibung

Die Erfindung betrifft eine Windkraftanlage mit an einer Rotornabe drehbar gelagerten Rotorblättern, deren Massenschwerpunkt ausserhalb ihrer Drehachse liegt, mit jeweils einem Antrieb zum separaten Verdrehen jedes Rotorblattes und mit jeweils einer mit einem Rotorblatt verbundenen Sperre.

Windkraftanlagen sind Anlagen, die hohen Beanspruchungen ausgesetzt sind. Eine Methode, die auf die Anlage wirkenden Kräfte zu reduzieren, ist der Einsatz einer Rotorblattverstellung. Neben dem Effekt der Lastreduktion kann die Rotorblattverstellung auch als Bremssystem eingesetzt werden, indem die Rotorblätter zur Abschaltung der Windkraftanlage in Richtung Segelstellung verdreht werden, und so die Anlage an Leistung bzw. Drehzahl verliert,

Grundsätzlich haben die Rotorblätter, soferne sie nicht festgehalten werden, die Tendenz, sich bedingt durch Massenkräfte bzw. Schwerkräfte (der Massenschwerpunkt der Rotorblätter liegt außerhalb ihrer Drehachse) und äußere Windkräfte zu verdrehen. Die Windkräfte bewirken hierbei eine Verdrehung der Rotorblätter in Richtung Segelstellung und die Massenkräfte eine verdrehung in beide Richtungen entsprechend der jeweiligen Position der Rotorblätter während einer Rotorumdrehung, wobei die Massenkräfte meist überwiegen. Eine Verdrehung der Rotorblätter über die Segelstellung hinaus wird üblicherweise durch einen mechanischen Anschlag begrenzt. Werden daher die Rotorblätter nicht festgehalten, so führen sie über den Verlauf einer Rotorumdrehung eine pendelnde Drehbewegung um ihre Drehachse aus, wodurch die Windkraftanlage bedingt durch die windkräfte nicht zum Stillstand gebracht werden kann.

Bei Anlagen entsprechend dem Stand der Technik, welche großteils drei Rotorblätter haben, wird die Rotorblattverstellung meist durch einen zentralen Linearantrieb in Kombination mit einem mechanischen Gestänge ausgeführt. Neuere Systeme bedienen sich einer mechanisch/elektrischen bzw. mechanisch/hydraulischen Einzelblattverstellung. Bei diesen Systemen wird jedes Rotorblatt einzeln verstellt und mittels einer Steuerungseinheit der Gleichlauf der Rotorblattverstellung realisiert. Der Vorteil einer Einzelblattverstellung ist, daß bei Ausfall einer Antriebseinheit die restlichen Antriebseinheiten noch einsatzfähig sind, um diese Rotorblätter in Segelstellung zu verdrehen, um die Anlage sicher zum Stillstand bringen.

Um das Abbremsen der Anlage mittels Rotorblattverstellung auch bei Ausfall der Leistungsversorgung sicherzustellen, ist diese bei Anlagen des Standes der Technik zB. mit einer Batterie-Notstromversorgung ausgestattet oder die Rotorblätter werden gegen Federkraft oder Hydraulikdruck in die Arbeitsposition gebracht, womit eine Rückstellung der Rotorblätter in die Segelstellung in jedem Fall gewährleistet ist.

Die Ausstattung einer Rotorblattverstellung mit einer Batterie-Notstromversorgung ist mit relativ hohen Kosten verbunden, da die für das Verdrehen in die bzw. das Halten der Rotorblätter in der Segelstellung bis zum Stillstand der Anlage erforderlichen Batterien eine nicht unbeträchtliche Leistung bzw. Kapazität aufweisen müssen.

Im Falle einer Verstellung der Rotorblätter gegen Federkraft oder Hydraulikdruck sind entsprechend aufwendige mechanische und hydraulische Vorrichtungen notwendig, wobei die Rotorblattverstellung auch für höhere Lasten auszulegen ist, da auch die Federkraft oder die Kraft der Hydraulik überwunden werden muß.

Aus der US-A-4,653,982 ist eine Windkraftanlage mit einer gattungsgemäßen Verstelleinrichtng für Rotorblätter bekannt, bei der die Rotorblätter beim Erreichen einer bestimmten maximalen Rotordrehzahl durch einen Elektromagnet unterstützt in die Segelstellung verdreht und in dieser Stellung gehalten werden, bis die Rotordrehzahl wieder unter eine bestimmte Drehzahl fällt und sich die Rotorblätter wieder automatisch in die Betriebsstellung drehen.

Aus der US-A-4,701,104 ist eine Verstelleinrichtung mit einer Sperre für die Rotorblätter einer Staudruckturbine bekannt, bei der die Sperre im Betrieb der Turbine mittels eines Elektromagneten offen gehalten wird. Wird die Sperre durch Unterbrechen der Stromzufuhr zum Elektromagneten aktiviert, werden die Rotorblätter durch die Verstelleinrichtung in die Segelstellung gedreht und in dieser Stellung gehalten.

In der US-A-5,452,988 ist ein Gasturbinengebläse mit einer Rotorblattverstellung beschrieben, die eine Verstelleinrichtung zum Verdrehen der Rotorblätter in die Betriebs- bzw. Segelstellung und zum Festhalten der Rotorblätter in der jeweils eingestellten Stellung aufweist.

Eine Windkraftanlage mit den Merkmal des Oberbegriffs des Anspruchs 1 ist aus DE-C-19 634 059 bekannt.

Der Erfindung liegt die Aufgabe zugrunde, eine Windkraftanlage zur Verfügung zu stellen, bei der das Verdrehen der Rotorblätter bei Ausfall der Leistungsversorgung in die Segelstellung mit geringerem technischem Aufwand möglich ist.

Gelöst wird diese Aufgabe mit einer Vorrichtung mit den Merkmalen des Anspruches 1.

Die Sperre ist im Normalbetrieb deaktiviert und wird bei Ausfall der Leistungsversorgung aktiviert, wodurch sich die Rotorblätter nur mehr in die Segelstellung drehen können und dort gehalten werden, bis die Anlage zum Stillstand gekommen ist.

Weitere Merkmale und Vorteile der Erfindung ergeben sich aus den Unteransprüchen und der nachfolgenden Beschreibung von Ausführungsbeispielen der Erfindung unter Bezugnahme auf die Zeichnungen.

Es zeigen:
Fig. 1 und 2 zwei Ausführungsformen von Rotorblattverstelleinrichtungen gemäß dem Stand der Technik,
Fig. 3 eine Ausführungsform der Rotorblattverstellung gemäß vorliegender Erfindung,
Fig. 4 eine Ausführungsform der Rücklaufsperre von Fig. 3,
Fig.5 eine weitere Ausführungsform der Rücklaufsperre von Fig. 3 und
Fig. 6 eine Ausführungsform einer Rotorblattlagerung und eines Rotorblattes, um ein erhöhtes Rückstellmoment der Rotorblätter zu erzielen.

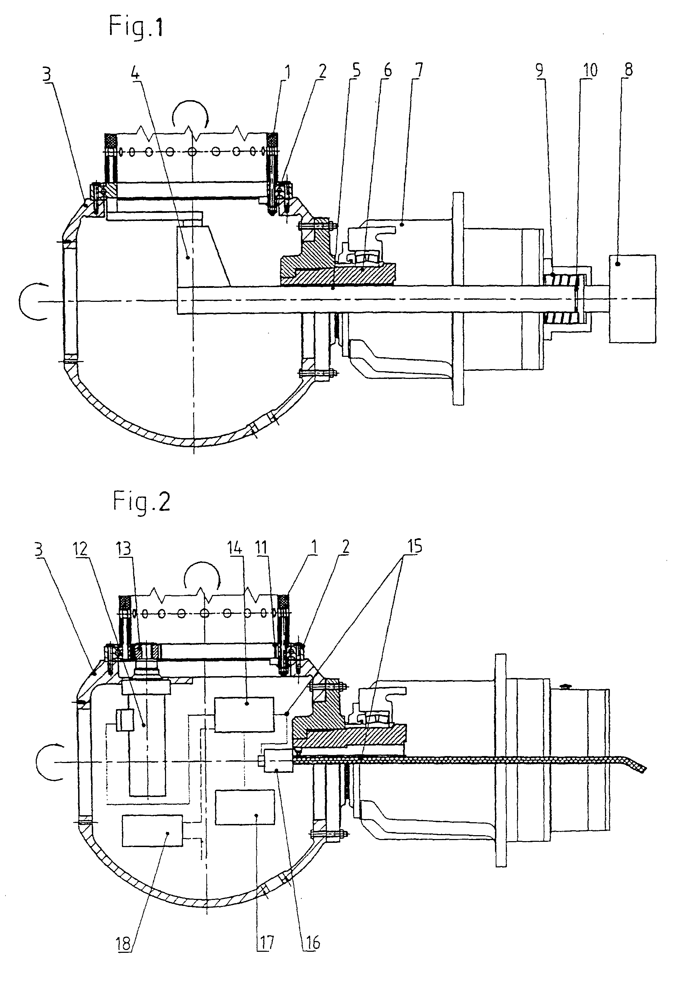

Fig. 1 zeigt die bei Windkraftanlagen am häufigsten verwendete Ausführungsform einer Rotorblattverstellung. Ein Rotorblatt 1 ist an einem Innenring eines Drehlagers 2 befestigt. Aus Gründen der Übersichtlichkeit ist nur ein Rotorblatt 1 eingezeichnet. Üblicherweise sind aber mehr als ein Rotorblatt 1, meist drei Rotorblätter 1, vorgesehen. Der Außenring dieses Drehlagers 2 ist mit einer rotierenden Rotornabe 3 verschraubt. Mittels eines mechanischen Gestänges 4 wird die Linearbewegung einer Schubstange 5 in eine Drehbewegung der Rotorblätter 1 umgewandelt. Die mit dem Rotor mitrotierende Schubstange 5 ist in einer Rotorwelle 6 und einem Getriebe 7 gelagert. Ein sich nicht drehender Hydraulikzylinder 8 leitet die Linearbewegung gegen die Kraft einer Feder 9 in die Schubstange 5 ein, wobei ein Drucklager 10 die rotierende Schubstange 5 von den nicht rotierenden Bauteilen wie Feder 9 und Hydraulikzylinder 8 in Drehrichtung entkoppelt. Bei einem Ausfall der Leistungsversorgung der Anlage werden die Rotorblätter 1 von der Feder 9 über das Gestänge 4, 5 in die Segelstellung gedreht.

Fig. 2 zeigt eine weitere Ausführungsform einer Rotorblattverstellung des Standes der Technik. Das Rotorblatt 1 ist an Drehlagern 11 mit einer Innenverzahnung befestigt. Der Außenring dieses Drehlagers 11 ist mit der rotierenden Rotornabe 3 verschraubt. Jedem Rotorblatt 1 ist ein Getriebemotor 12 mit einem Ritzel 13 zugeordnet, der das Rotorblatt 1 verdreht. Jeder Getriebemotor 12 wird über jeweils einen Umrichter 14 angesteuert. Die Leistungsversorgung erfolgt im Normalbetrieb für alle Antriebseinheiten über eine Leitung 15 und einen Schleifring 16. Eine Steuereinheit 18 gewährleistet den Gleichlauf der Rotorblätter 1. Im Falle eines Ausfalles dieser Leistungsversorgung wird jeder Umrichter 14 getrennt von einer Batterie-Notstromversorgung 17 versorgt, wodurch die Rotorblätter 1 auch in diesem Fall in Segelstellung gebracht werden können.

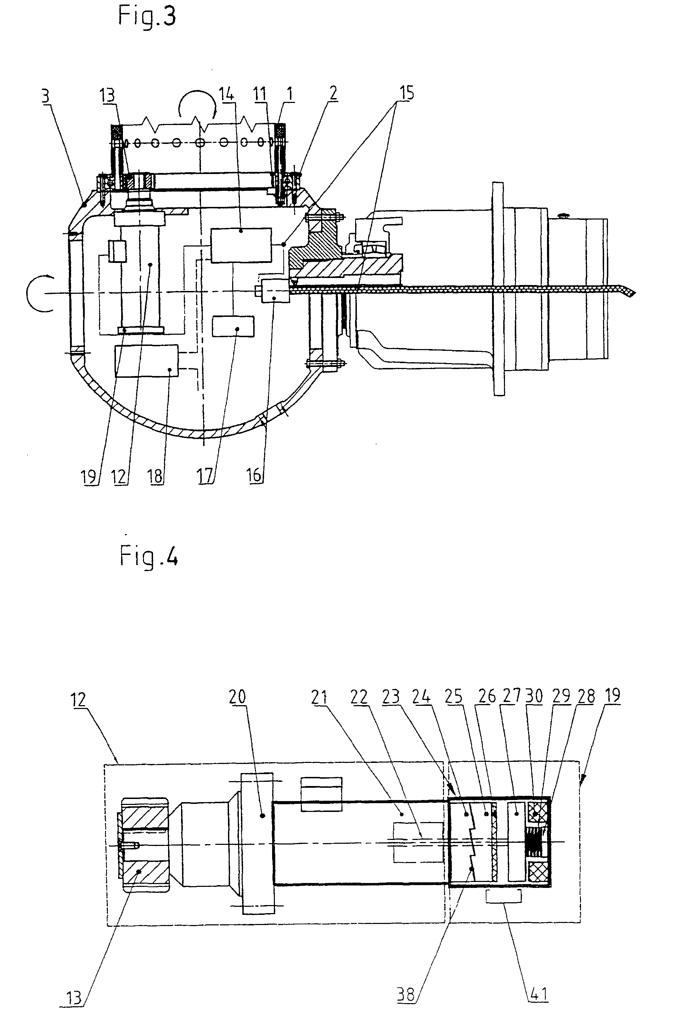

Fig. 3 zeigt eine erste Ausführungsform einer Rotorblattverstellung gemäß vorliegender Erfindung. Das Rotorblatt 1 ist, wie an sich bekannt, an einem Drehlager 2 mit einer Innenverzahnung 11 befestigt. Der Außenring dieses Drehlagers 2 ist mit der rotierenden Rotornabe 3 verschraubt. Mittels des Getriebemotors 12 und des Ritzels 13 wird jedes Rotorblatt 1 (üblicherweise drei Rotorblätter 1) separat verdreht. Jeder Getriebemotor 12 wird über jeweils einen Umrichter 14 angesteuert. Die Leistungsversorgung erfolgt für alle Antriebseinheiten über die Leitung 15 und den Schleifring 16. Bei einem Ausfall dieser Leistungsversorgung bewirkt eine mit dem Getriebemotor 12 verbundene Sperre 19, daß sich die Rotorblätter nur in Richtung Segelstellung verdrehen können.

Fig. 4 zeigt eine erste, erfindungsgemäße Ausführungsform der Sperre 19 von Fig. 3, die als Rücklaufsperre ausgeführt ist. Der Getriebemotor 12 weist ein Getriebe 20, einen Stator 21 und einen Rotor mit verlängerter Rotorwelle 22 auf. Die Rücklaufsperre 19 weist ein mit dem Stator 21 fest verbundenes Gehäuse 23 und einen ebenfalls mit dem Stator 21 fest verbundenen Unterteil 24 eines Freilaufes auf. Ein Oberteil 41 des Freilaufes weist einen Kupplungsteil 25 mit einem Bremsbelag 26 auf der vom Unterteil 24 abgewandten Seite auf. Der Kupplungsteil 25 ist frei drehend und achsial verschiebbar auf der Rotorwelle 22 gelagert. Der Kupplungsteil 25 und der Unterteil 24 weisen auf den einander zugewandten Seiten ein sägezahnartiges Profil 38 auf, das eine gegenseitigte Verdrehung nur in eine Richtung erlaubt. Der Oberteil 41 weist weiters eine Bremsscheibe 27 auf, die ebenfalls achsial verschiebbar jedoch drehfest mit der Rotorwelle 22 verbunden ist. Die Rotorwelle 22 hat ein plattenförmiges Ende 28. Eine Feder 29 ist zwischen dem plattenförmigen Ende 28 und der Bremsscheibe 27 auf Druck vorgespannt. Zur Rotorblattverstellung im Normalbetrieb wird die Bremsscheibe 27 von einem Elektromagnet 30 gegen die Kraft der Feder 29 vom Bremsbelag 26 abgehoben, wodurch der Getriebemotor 12 in beide Richtungen frei drehbar ist. Grundsätzlich ist es auch denkbar, daß die Bremsscheibe 27 und der Bremsbelag 26 entfallen und die Feder 29 auf den Kupplungsteil 25 drückt, sowie daß der Kupplungsteil 25 direkt vom Elektromagnet 30 angezogen wird. Der Kupplungsteil 25 muß dann natürlich drehfest mit der Welle 22 verbunden sein.

Bei Ausfall der Leistungsversorgung wird der Elektromagnet 30 automatisch deaktiviert, wodurch die Bremsscheibe 27 durch die Kraft der Feder 29 gegen den Bremsbelag 26 gedrückt wird, sodaß der Kupplungsteil 25 des Freilaufes drehfest mit der Rotorwelle 22 verbunden ist. Durch das sägezahnartige Profil 38 des Kupplungsteiles 25 und des Unterteiles 24 des Freilaufes sowie durch die gegen die Kraft der Feder 29 achsiale Verschiebbarkeit des Kupplungsteiles 25 ist die Rotorwelle 22 des Motors 12 und in der Folge des Rotorblattes 1 nur mehr in Richtung Segelstellung bis zu einem mechanischen Anschlag verdrehbar.

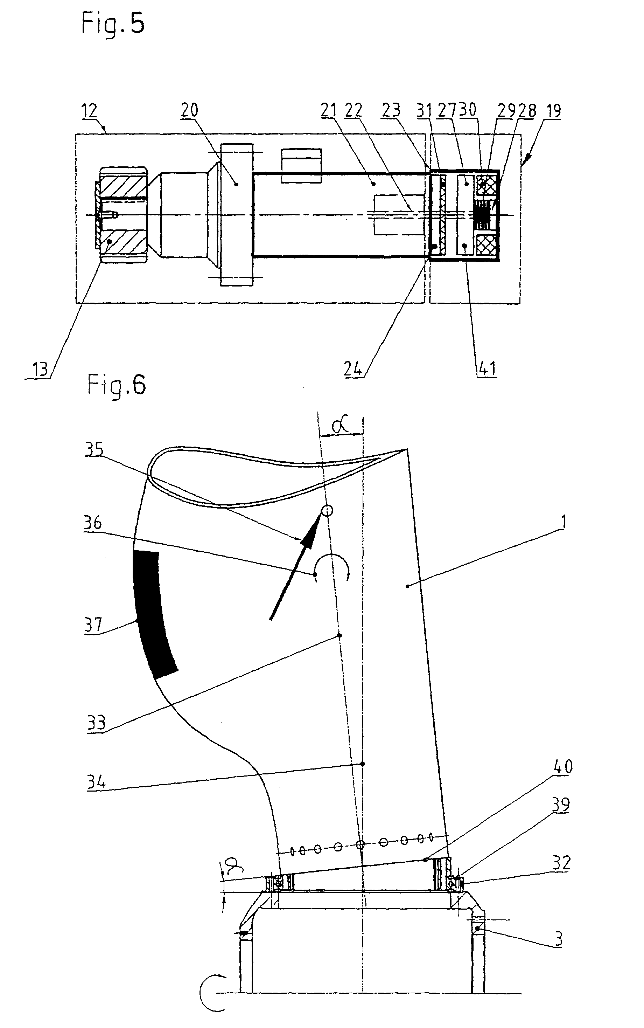

Fig. 5 zeigt eine weitere erfindungsgemäße Ausführungsform der Rücklaufsperre von Fig. 3. Der Getriebemotor 12 weist wiederum ein Getriebe 20, einen Stator 21 und einen Rotor mit verlängerter Rotorwelle 22 auf. Die Sperre 19 weist das mit dem Stator 21 fest verbundene Gehäuse 23 und einen ebenfalls mit dem Stator 21 fest verbundenen Unterteil 24, an dem ein Bremsbelag 31 befestigt ist, auf. Die Bremsscheibe 27, die den Oberteil 41 der Sperre bildet, ist hier ebenfalls achsial verschiebbar und drehfest mit der Rotorwelle 22 verbunden. Die Rotorwelle 22 hat ein plattenförmiges Ende 28, und die Feder 29 ist zwischen dem plattenförmigen Ende 28 und der Bremsscheibe 27 auf Druck vorgespannt. Der Elektromagnet 30 hebt die Bremsscheibe 27 im Normalbetrieb gegen die Kraft der Feder 29 vom Bremsbelag 31 ab, wodurch der Getriebemotor 12 in beide Richtungen frei drehbar ist. Im Falle einer Deaktivierung des Elektromagneten 30 wird die Bremsscheibe 27 durch die Kraft der Feder 29 gegen den Bremsbelag 31 gedrückt, womit dieser bzw. der Stator 21 drehfest mit der Rotorwelle 22 verbunden ist, wodurch eine Verdrehung der Rotorwelle 22 verhindert wird. Der Elektromagnet 30 der Sperre jedes einzelnen Getriebemotors 12 wird getrennt mit Strom versorgt und mittels einer Steuerungseinheit auch individuell betätigt. Bei Ausfall der Leistungsversorgung für die Getriebemotore wird während des Umlaufes des Rotors der Elektromagnet 30 nur in dem Bereich aktiviert und dadurch die Bremsscheibe 27 vom Bremsbelag 31 abgehoben, in dem sich die Rotorblätter - bedingt durch die Kombination hoben, in dem sich die Rotorblätter - bedingt durch die Kombination aus äußeren Windkräften und Massenkräften - in Richtung Segelstellung bewegen. Damit wird erreicht, daß sich die Rotorblätter nur in Richtung Segelstellung bewegen, und so eine kontinuierliche Abbremsung des Rotors erfolgt. Für die Leistungsversorgung der Elektromagnete 30 und der Steuerung ist in diesem Fall eine Notstromversorgung in Form einer Batterie 17 vorgesehen, die allerdings aufgrund des relativ kleinen Leistungsbedarfs kleiner als die Batterie 17 beim Stand der Technik ausfallen kann, bei dem die Batterie 17 die Energie für das aktive Verdrehen der Rotorblätter 1 bis in die Segelstellung und das Halten der Rotorblätter 1 in dieser Stellung bis zum vollständigen Stillstand der Anlage liefern muß.

In einer Ausführungsform der Erfindung kann auch vorgesehen sein, daß eine (bei der Ausführungsform von Fig. 5 ohnedies vorgesehene) Batterie 17 dafür verwendet wird, die Rotorblätter 1 wenigstens teilweise, z.B. um 10° bis 20°, aus der Betriebsstellung in Richtung Segelstellung zu verdrehen, um ein möglichst rasches Abbremsen bzw. bei starken Windböen ein weiteres Beschleunigen des Rotors zu verhindern. Gleichzeitig wird bei der Ausführungsform von Fig. 4 die Rücklaufsperre 19 aktiviert, die ein anschließendes Zurückdrehen der Rotorblätter 1 in die Betriebsstellung verhindert. Bei der Ausführungsform von Fig. 5 wird nach diesem Verdrehen der Rotorblätter 1 um vorzugsweise 10° bis 20°, je nachdem, ob die Massenkräfte gerade ein Verdrehen in die Segelstellung bewirken oder nicht, die Sperre 19 offen gehalten oder aktiviert.

Anstatt der dargestellten und beschriebenen Bremsbeläge 26, 31, die mit einer Bremsscheibe 27 zusammenwirken, können natürlich auch formschlüssige Verbindungsmittel, wie z.B. Klauenkupplungen, vorgesehen sein, wodurch die Feder 29 und entsprechend auch der Elektromagnet 30 schwächer ausgeführt werden können.

Fig. 6 zeigt Ausführungsformen von Rotorblattlagerung und Rotorblatt in Segelstellung, mit denen ein erhöhtes Rückstellmoment der Rotorblätter 1 erzielt werden kann. Das Rotorblatt 1 ist an einem Drehlager 32 befestigt. Der Außenring dieses Drehlagers 32 ist mit der drehenden Rotornabe 3 verschraubt. Das Drehlager 32 hat eine gegenüber der Anschraubfläche zur Rotornabe 3 geringfügig (ca. 1° bis 2°) geneigte Anschraubfläche für die Rotorblätter 1. Damit ist die Drehlager 32 ebenfalls um diesen Winkel α geneigt. Man erreicht dadurch, daß der durch die äußeren Windkräfte resultierende Kraftvektor 35 außerhalb der Drehachse 34 angreift, wodurch ein zusätzliches Drehmoment 36 um die Drehachse 34 in Richtung Segelstellung wirkt.

Alternativ oder zusätzlich kann man an der Endkante der Rotorblätter 1 ein Zusatzgewicht 37 befestigen, das auch ein zusätzliches Drehmoment um die Drehachse 34 bewirkt, welches in Abhängigkeit von der Position des Rotorblattes 1 während einer Rotorumdrehung ein Verdrehen in Richtung Arbeitsposition oder Segelstellung bewirkt. Da bei Ausfall der Leistungsversorgung die Sperre nur ein Verdrehen der Rotorblätter 1 in Richtung Segelstellung zuläßt und die Gegenrichtung sperrt, bewirken diese Maßnahmen ein beschleunigtes Verdrehen der Rotorblätter 1 in Richtung Segelstellung und somit ein beschleunigtes Abbremsen des Rotors.

## Patentansprüche

1. Windkraftanlage mit an einer Rotornabe (3) drehbar gelagerten Rotorblättern (1), deren Massenschwerpunkt ausserhalb ihrer Drehachse (34) liegt, mit jeweils einem Verstellantrieb (12) zum separaten Verdrehen jedes Rotorblattes (1) und mit jeweils einer mit einem Rotorblatt (1) verbundenen Sperre (19), **dadurch gekennzeichnet, daß** die Sperren bei Ausfall der Leistungsversorgung des Antriebes (12) aktivierbare Sperren (19) sind, welche im aktivierten Zustand ein Verdrehen der Rotorblätter (1) in die Betriebsstellung verhindern, aber ein Verdrehen der Rotorblätter in die Segelstellung zulassen.

2. Vorrichtung nach Anspruch 1, **dadurch gekennzeichnet, daß** die Sperre (19) eine Rücklaufsperre ist, welche ein Verdrehen des Rotorblattes (1) in die Betriebsstellung verhindert.

3. Vorrichtung nach Anspruch 1 oder 2, **dadurch gekennzeichnet, daß** die Sperre (19) dem Antrieb (12) für das Rotorblatt (1) zugeordnet ist.

4. Vorrichtung nach einem der Ansprüche 1 bis 3, **dadurch gekennzeichnet, daß** die Sperre (19) einen mit der Rotornabe (3) verbundenen Teil (24) und einen mit dem Rotorblatt (1) verbundenen Teil (41) aufweist, die zum Verhindern des Verdrehens des Rotorblattes (1) miteinander verbindbar sind.

5. Vorrichtung nach Anspruch 4, **dadurch gekennzeichnet, daß** der mit dem Rotorblatt (1) verbundene Teil (41) der Sperre (19) mit der Rotorwelle (22) des Antriebes (12) drehfest verbunden ist.

6. Vorrichtung nach Anspruch 4 oder 5, **dadurch gekennzeichnet, daß** der mit der Rotornabe (3) verbundene Teil (24) der Sperre (19) vorzugsweise mit dem Stator- (21) oder Getriebegehäuse (20) des Antriebes (12) fest verbunden ist, und daß der mit dem Rotorblatt (1) verbundene Teil (41) axial verschiebbar auf der Rotorwelle (22) gelagert ist.

7. Vorrichtung nach einem der Ansprüche 4 bis 6, **dadurch gekennzeichnet, daß** der mit dem Rotorblatt (1) verbundene Teil (41) und der mit der Rotornabe (3) verbundene Teil (24) formschlüssig miteinander verbindbar sind.

8. Vorrichtung nach Anspruch 7, **dadurch gekennzeichnet, daß** auf den einander zugeordneten Seiten des mit dem Rotorblatt (1) verbundenen einander zugeordneten Seiten des mit dem Rotorblatt (1) verbundenen Teils (41) und des mit der Rotornabe (3) verbundenen Teils (24) ein miteinander in Eingriff bringbares, etwa sägezahnartiges Profil (38) vorgesehen ist.

9. Vorrichtung nach einem der Ansprüche 4 bis 6, **dadurch gekennzeichnet, daß** der mit dem Rotorblatt (1) verbundene Teil (41) und der mit der Rotornabe (3) verbundene Teil (24) reibschlüssig miteinander verbindbar sind.

10. Vorrichtung nach einem der Ansprüche 4 bis 9, **dadurch gekennzeichnet, daß** eine Einrichtung (30) vorgesehen ist, um den mit dem Rotorblatt (1) verbundenen Teil (41) und den mit der Rotornabe (3) verbundenen Teil (24, 31) voneinander zu lösen und daß der mit dem Rotorblatt (1) verbundene Teil (41) durch die Kraft einer Feder (29) ständig in Richtung zum mit der Rotornabe (3) verbundenen Teil (24) hin gedrückt wird.

11. Vorrichtung nach Anspruch 10, **dadurch gekennzeichnet, daß** die Einrichtung (30) ein Elektromagnet ist.

12. Vorrichtung nach einem der Ansprüche 4 bis 11, **dadurch gekennzeichnet, daß** der mit dem Rotorblatt (1) verbundene Teil (41) eine Bremsscheibe (27) aufweist.

13. Vorrichtung nach einem der Ansprüche 7, 8 oder 10 bis 12, **dadurch gekennzeichnet, daß** der mit dem Rotorblatt (1) verbundene Teil (41) eine drehfest mit der Rotorwelle (22) verbundene Bremsscheibe (27) sowie einen Kupplungsteil (25) aufweist, der auf der dem mit der Rotornabe (3) verbundenen Teil (24) zugewandten Seite z.B. das im wesentlichen sägezahnartigen Profil (38) aufweist und der auf der der Bremsscheibe (27) zugewandten Seite einen Bremsbelag (26) aufweist, und daß der Kupplungsteil (25) verdrehbar und axial verschiebbar auf der Rotorwelle (22) gelagert ist.

14. Vorrichtung nach Anspruch 9 und 12, **dadurch gekennzeichnet, daß** am mit der Rotornabe (3) verbundenen Teil (24) auf der der Bremsscheibe zugewandten Seite ein Bremsbelag (31) vorgesehen ist.

15. Vorrichtung nach einem der Ansprüche 10 bis 14, **dadurch gekennzeichnet, daß** sich die Feder (29) einerseits am mit dem Rotorblatt (1) verbundenen Teil (41) und andererseits an einem Ansatz (28) an der Rotorwelle (22) abstürzt.

16. Vorrichtung nach einem der Ansprüche 1 bis 15, **dadurch gekennzeichnet, daß** eine Notstromversorgung (17) in Form einer Batterie oder eines Akkumulators vorgesehen ist, die zum Verdrehen der Rotorblätter (1) in die Segelstellung und ggf. zum Aktivieren des Elektromagneten (30) vorgesehen ist.

17. Vorrichtung nach einem der Ansprüche 1 bis 16, **dadurch gekennzeichnet, daß** die Längsachse (33) des Rotorblattes (1) zur Drehachse (34) des Rotorblattes (1) geneigt ist.

18. Vorrichtung nach Anspruch 17, **dadurch gekennzeichnet, daß** das Rotorblatt (1) über ein Drehlager (32) mit der Rotornabe (3) verbunden ist, wobei die Stirnfläche (39) des Außenringes des Drehlagers (32), der mit der Rotornabe (3) verbunden ist, im Winkel (α) zur Stirnfläche (40) des Innenringes des Drehlagers (32), der mit dem Rotorblatt (1) verbunden ist, geneigt ist.

19. Vorrichtung nach einem der Ansprüche 1 bis 18, **dadurch gekennzeichnet, daß** am Rotorblatt (1), vorzugsweise an der Endkante des Rotorblattes (1), ein Zusatzgewicht (37) befestigt ist.

## Claims

1. Windpower plant having rotor blades (1) which are rotatably mounted on a rotor hub (3), the centre of mass of which blades is situated outwith their axis of rotation (34), having respectively one adjusting drive (12) for separate twisting of each rotor blade (1) and having respectively one locking device (19) which is connected to one rotor blade (1), **characterised in that** the locking devices are locking devices (19) which can be activated in the case of interruption of the power supply of the drive (12), which locking devices in the activated state prevent twisting of the rotor blades (1) into the operating position, but permit twisting of the rotor blades into the feathered position.

2. Device according to claim 1, **characterised in that** the locking device (19) is a reverse locking device, which prevents twisting of the rotor blade (1) into the operating position.

3. Device according to claim 1 or 2, **characterised in that** the locking device (19) is assigned to the drive (12) for the rotor blade (1).

4. Device according to one of the claims 1 to 3, **characterised in that** the locking device (19) has a part (24) which is connected to the rotor hub (3) and a part (41) which is connected to the rotor blade (1), which parts can be connected to each other in order to prevent the twisting of the rotor blade (1).

5. Device according to claim 4, **characterised in that** the part (41) of the locking device (19) which is connected to the rotor blade (1) is non-rotatably connected to the rotor shaft (22) of the drive (12).

6. Device according to claim 4 or 5, **characterised in that** the part (24) of the locking device (19) which is connected to the rotor hub (3) is securely connected to preferably the stator- (21) or transmission housing (20) of the drive (12), and **in that** the part (41) which is connected to the rotor blade (1) is mounted axially displaceably upon the rotor shaft (22).

7. Device according to one of the claims 4 to 6, **characterised in that** the part (41) which is connected to the rotor blade (1) and the part (24) which is connected to the rotor hub (3) can be connected together in a form-fitting manner.

8. Device according to claim 7, **characterised in that** a saw-toothed, for instance, profile (38) which can be brought together into engagement is provided upon the mutually assigned sides of the part (41) which is connected to the rotor blade (1) and of the part (24) which is connected to the rotor hub (3).

9. Device according to one of the claims 4 to 6, **characterised in that** the part (41) which is connected to the rotor blade (1) and the part (24) which is connected to the rotor hub (3) can be connected together in a frictionally engaged manner.

10. Device according to one of the claims 4 to 9, **characterised in that** a device (30) is provided in order to release the part (41) which is connected to the rotor blade (1) and the part (24, 31) which is connected to the rotor hub (3) from each other, and **in that** the part (41) which is connected to the rotor blade (1) is constantly forced in the direction towards the part (24) which is connected to the rotor hub (3) by means of the force of a spring (29).

11. Device according to claim 10, **characterised in that** the device (30) is an electromagnet.

12. Device according to one of the claims 4 to 11, **characterised in that** the part (41) which is connected to the rotor blade (1) has a brake disc (27).

13. Device according to one of the claims 7, 8 or 10 to 12, **characterised in that** the part (41) which is connected to the rotor blade (1) has a brake disc (27), which is connected non-rotatably to the rotor shaft (22), and also a coupling part (25), which has for example the essentially saw-toothed profile (38) on the side which is facing towards the part (24) which is connected to the rotor hub (3) and which has a brake lining (26) on the side which is facing towards the brake disc (27), and **in that** the coupling part (25) is mounted twistably and axially displaceably upon the rotor shaft (22).

14. Device according to claim 9 and 12, **characterised in that**, on the part (24) which is connected to the rotor hub (3), a brake lining (31) is provided on the side which is facing towards the brake disc.

15. Device according to one of the claims 10 to 14, **characterised in that** the spring (29) is supported on the one hand on the part (41) which is connected to the rotor blade (1) and on the other hand on a shoulder (28) on the rotor shaft (22).

16. Device according to one of the claims 1 to 15, **characterised in that** an emergency current supply (17) is provided in the form of a battery or an accumulator, which is provided for twisting the rotor blades (1) into the feathered position and if necessary for activating the electromagnet (30).

17. Device according to one of the claims 1 to 16, **characterised in that** the longitudinal axis (33) of the rotor blade (1) is inclined relative to the axis of rotation (34) of the rotor blade (1).

18. Device according to claim 17, **characterised in that** the rotor blade (1) is connected to the rotor hub (3) via a pivot bearing (32), the end face (39) of the outer ring of the pivot bearing (32) which is connected to the rotor hub (3) being inclined at an angle (α) relative to the end face (40) of the inner ring of the pivot bearing (32) which is connected to the rotor blade (1).

19. Device according to one of the claims 1 to 18, **characterised in that** an additional weight (37) is attached on the rotor blade (1), preferably on the end edge of the rotor blade (1).

## Revendications

1. Installation éolienne avec des pales de rotor (1) qui sont montées tournantes sur un moyeu de rotor (3) et dont le centre de gravité est situé en dehors de leur axe de rotation (34), avec chaque fois un mécanisme de réglage (12) pour la rotation séparée de chaque pale de rotor (1), et avec chaque fois un moyen de blocage (19) lié à une pale de rotor (1), **caractérisée en ce que** les moyens de blocage, sont des moyens de blocage (19) activables en cas de panne de l'alimentation en énergie du mécanisme d'entraînement (12), qui à l'état activé empêchent une rotation des pales de rotor (1) dans la position de fonctionnement mais permettent une rotation des pales de rotor (1) vers la position dite de drapeau.

2. Dispositif selon la revendication 1, **caractérisé en ce que** le moyen de blocage (19) est un moyen de blocage anti-retour qui empêche une rotation de la pale (1) vers sa position de fonctionnement.

3. Dispositif selon la revendication 1 ou 2, **caractérisé en ce que** le moyen de blocage (19) est associé au mécanisme d'entraînement (12) de la pale (1).

4. Dispositif selon une des revendications 1 à 3, **caractérisé en ce que** le moyen de blocage (19) comporte un élément (24) lié au moyeu de rotor (3) et un élément (41) lié à la pale de rotor (1), qui peuvent être reliés l'un à l'autre pour empêcher la rotation de la pale de rotor (1).

5. Dispositif selon la revendication 4, **caractérisé en ce que** l'élément (41) lié à la pale de rotor (1) du moyen de blocage (19) est solidaire en rotation de l'axe de rotor (22) du mécanisme d'entraînement (12).

6. Dispositif selon la revendication 4 ou 5, **caractérisé en ce que** l'élément (24) du moyen de blocage (19) lié au moyeu de rotor (3), de préférence est solidaire du carter de stator (21) ou du carter d'engrenages (20) du mécanisme d'entraînement (12), et **en ce que** l'élément (41) lié à la pale de rotor (1) est monté coulissant dans la direction axiale sur l'axe de rotor (22).

7. Dispositif selon une des revendications 4 à 6, **caractérisé en ce que** l'élément (41) lié à la pale de rotor (1) et l'élément (24) lié au moyeu de rotor (3) sont liés entre eux par complémentarité de formes.

8. Dispositif selon la revendication 7, **caractérisé en ce qu'**il est prévu sur des côtés mutuellement associés de l'élément (41) lié à la pale de rotor (1) et de l'élément (24) lié au moyeu de rotor (3) des profils (38) sensiblement en dents de scie qui peuvent être amenés en prise l'un avec l'autre.

9. Dispositif selon une des revendications 4 à 6, **caractérisé en ce que** l'élément (41) lié à la pale de rotor (1) et l'élément (24) lié au moyeu de rotor (3) peuvent être liés l'un à l'autre par frottements.

10. Dispositif selon une des revendications 4 à 9, **caractérisé en ce qu'**il est prévu un mécanisme (30) pour séparer l'un de l'autre l'élément (41) lié à la pale de rotor (1) et l'élément (24, 31) lié au moyeu de rotor (3) et **en ce que** l'élément (41) lié à la pale de rotor (1) est en permanence poussé par la force d'un ressort (29) en direction de l'élément (24) lié au moyeu de rotor (3).

11. Dispositif selon la revendication 10, **caractérisé en ce que** le mécanisme (30) est un électroaimant.

12. Dispositif selon une des revendications 4 à 11, **caractérisé en ce que** l'élément (41) lié à la pale de rotor (1) présente un disque de freinage (27).

13. Dispositif selon une des revendications 7, 8 ou 10 à 12, **caractérisé en ce que** l'élément (41) lié à la pale de rotor (1) présente un disque de freinage (27) solidaire en rotation de l'axe de rotor (22) ainsi qu'un élément d'accouplement (25), qui du côté tourné vers l'élément (24) lié au moyeu de rotor (3) présente par exemple un profil (38) essentiellement en dents de scie et qui du côté tourné vers le disque de freinage (27) présente une garniture de frein (26) et **en ce que** l'élément d'accouplement (25) est monté avec possibilité de rotation et de coulissement dans la direction axiale sur l'axe de rotor (22).

14. Dispositif selon les revendications 9 et 12, **caractérisé en ce qu'**une garniture de frein (31) est prévue sur l'élément (24) lié au moyeu de rotor (1) du côté de celui-ci tourné vers le disque de freinage.

15. Dispositif selon une des revendications 10 à 14, **caractérisé en ce que** le ressort (29) prend appui d'un côté sur l'élément (41) lié à la pale de rotor (1) et de l'autre sur un épaulement (28) de l'axe de rotor (22).

16. Dispositif selon la revendications 1 à 15, **caractérisé en ce qu'**il est prévu une alimentation de secours (17) sous la forme d'une batterie ou d'un accumulateur pour amener les pales de rotor (1) dans la position de drapeau et le cas échéant activer l'électro-aimant (30).

17. Dispositif selon une des revendications 1 à 16, **caractérisé en ce que** l'axe longitudinal (33) da la pale de rotor (1) est incliné par rapport à l'axe de rotation (34).

18. Dispositif selon la revendication 17, **caractérisé en ce que** la pale de rotor (1) est liée au moyeu de rotor (3) par l'intermédiaire d'un roulement (32), la face frontale (37) de la bague extérieure du roulement (32) qui est liée au moyeu de rotor (3) formant un angle (α) avec la face frontale (40) de la bague intérieure du roulement (32) liée à la pale de rotor (1).

19. Dispositif selon une des revendications 1 à 18, **caractérisé en ce qu'**un poids additionnel (37) est fixé à la pale de rotor (1), prèfèrablement au bord d'extrémité de la pale de rotor (1).
